# EUROPEAN PATENT SPECIFICATION

(11) **EP 1 647 185 B1**
(45) Date of publication and mention of the grant of the patent: **15.10.2008**
(21) Application number: 05017106.5
(22) Date of filing: 05.08.2005
(51) Int. Cl.: A01K 97/12

(54) **Signalling device applicable to fishing rods for signalling touching or biting of bait**
An Angelruten anwendbarer Fischbissanzeiger
Détecteur de touche ou de prise de poisson à monter sur une canne à pêche

(30) Priority: 13.10.2004 IT MI20041933
(43) Date of publication of application: 19.04.2006
(73) Proprietor: Goretti, Marco, 23821 Abadia Lariana LC (IT); Longhi, Maria Antonietta, 23821 Abbadia Lariana LC (IT)
(72) Inventor: Goretti, Marco, 23821 Abadia Lariana LC (IT); Longhi, Maria Antonietta, 23821 Abbadia Lariana LC (IT)
(74) Representative: Lunati, Vittoriano

(56) References cited:
- EP-A- 1 382 242
- WO-A-00/76311
- FR-A- 2 744 331
- US-A- 3 959 910
- US-A- 5 797 211
- US-A1- 2003 066 229

## Description

The present invention relates a signalling device applicable to fishing rods for signalling touching or biting of the bait, of the type defined in the preamble of the accompanying Claim 1.

As it is known, different types of bite signalling devices for fishing rods are produced.

Their function, whatever the type, is to alert or warn the fisherman that a fish has touched or taken the bait so that the fish can be reeled in immediately or in any case before it can free itself and escape.

In some cases these devices support the fishing rod, so that the fisherman does not have to sustain it, and monitor the line tension to keep a check on the bites.

In other cases the bite signalling devices are located in the fishing rod reel, and also in this case monitor the line tension to keep a check on any bites.

Other types provide for said devices to be positioned along the rod, and hooked to the line to monitor its tension. In particular FR 2744331 and US 3959910 teach to insert the signalling devices along the rod and near the fishing reel, to monitor the line tension before the winding of the line into the fishing reel.

A last type - disclosed in US 2003/066229, WO 00/76311, US 5797211, EP 1382242 - provides for the device to be located on the end part of the fishing rod, named tip, or near to it, and fixed to it.

In the latter case the device can detect touching or biting either by monitoring the line tension, as in the preceding cases, or by detecting the vibrations and flexions present in this end part of the fishing rod, which can be caused by a fish touching or biting the bait.

The latter type of signalling device achieves considerable advantages with respect to the preceding ones, in particular if it does not operate by monitoring the tension of the fishing rod line.

Said devices, in fact, can be easily installed on the fishing rod, as the line is not involved in assembly of the device on the fishing rod.

Furthermore said devices are lighter and therefore easier to transport than the preceding ones.

The above known art has some important drawbacks, however.

In fact, the bite signalling devices positioned near the end or on the end itself and which do not involve the fishing rod line often have poor sensitivity and dependability, not immediately perceiving that a fish is touching or biting the bait.

Furthermore said devices use clamps or supports which are fastened to the fishing rod and are not practical when the user wishes to completely close a telescopic fishing rod.

To do this, the signalling device has to be released from the fishing rod, otherwise it is not possible to close the segment comprising it. It is evident that if said connection and release operation of the signalling device requires a few minutes each time, it can become a nuisance to the extent that it discourages potential users, in addition to running the risk of breaking the most delicate and important part of the fishing rod.

In US 2003/066229 and in WO 00/76311 the signalling device is fastened to the fishing rod by dilatable rings, having a substantially continuous shape when not forced.

In US 2003/066229 and in WO 00/76311 also the warning unit (including inside the sensor members and the alarm means) is fastened in the signalling device by rings and dilatable rings.

In WO 00/76311 there is a tubular adapter between a dilatable ring of the signalling device and the fishing rod. Moreover, a dilatable ring is integral with a further ring for guiding the line.

US 5797211 shows a signalling device realized by a warning unit integral with an attachment to the fishing rod having a wide split. Therefore the signalling device must be fully replaced when the fishing rod is replaced by another fishing rod having different dimensions.

The signalling device of EP 1382242 is made by two elements, one of which is a warning unit, and the other an attachment, and they are joined to each other, including inside the fishing rod, by two teeth.

A further drawback of this type of device is that it sometimes causes false alarms. Said situation can occur in particular when the wind bends the end of the fishing rod or when there is strong turbulence due to the current or movement of the water.

It is also possible for the line of the fishing rod to become accidentally entangled in said devices, .in particular in the clamps necessary for fixing, during both casting and reeling in.

A further drawback of this type of device is that whenever the line is cast, the device has to be dismantled, otherwise there is the real risk of the line becoming entangled in parts of the support.

In this situation the technical task underlying the present invention is to develop a signalling device which is able to substantially remedy the drawbacks referred to.

Within said technical task an important aim of the invention is to produce a signalling device with a high sensitivity.

Another important aim of the invention is to obtain a signalling device that does not give rise to false alarms in the presence of environmental disturbances.

A further aim of the invention is to produce a signalling device that is very quick to install and de-install.

A further aim of the invention is to make available a signalling device that does not involve the line of the fishing rod if fitted on the same and which does not cause interferences with the line during use of the fishing rod.

A further important aim of the invention is to obtain a long-lasting signalling device.

The technical task and the aims specified are achieved by a signalling device which can be applied to fishing rods for signalling touching or biting of the bait as claimed in Claim 1.

Preferred embodiments are highlighted in the subclaims.

The description of preferred embodiments of a signalling device according to the invention is provided below, as a non-limiting example, as illustrated in the attached drawings in which:
**Fig. 1** shows an axonometric view of an example of embodiment of the signalling device according to the invention;
**Fig. 2** shows the signalling device according to the invention, fitted on a fishing rod;
**Fig. 3** schematises in section a detail of the device;
**Fig. 4a** shows a front view of a further embodiment example of the device which does not form a part of the invention;
**Fig. 4b** is a lateral view of the embodiment of Fig. 4a;
**Fig. 4c** shows a view from below of the embodiment of Fig. 4a;
**Fig. 5a** shows a front view of a further embodiment example of part of the device;
**Fig. 5b** is a lateral view of the embodiment of Fig. 5a;
**Fig. 5c** shows a view from below of the embodiment of Fig. 5a;
**Fig. 6a** shows a front view of a further embodiment example of the device which does not form a part of the invention;
**Fig. 6b** is a lateral view of the embodiment of Fig. 6a;
**Fig. 7** is a lateral view of yet another example of embodiment of part of the device;
**Fig. 8a** shows a front view of a further embodiment example of the device which does not form a part of the invention;
**Fig. 8b** is a lateral view of the embodiment of Fig. 8a;
**Fig. 8c** shows a view from below of the embodiment of Fig. 8a;
**Fig. 9** shows a fitting that can be applied to the device highlighted in Fig. 8a, 8b, 8c; and
**Fig. 10** shows a different fitting that can be applied to the device highlighted in Fig. 8a, 8b, 8c.

With reference to the above Figures, the signalling device according to the invention, designed for signalling bites on fishing rods, is indicated overall by number **1.**

It comprises at least one warning unit **2** and said warning unit 2 in turn includes at least one vibration sensor member **3.**

The sensor member 3 perceives the vibrations to which the signalling device 1 is subject and correlates them with an electromagnetic or mechanical signal.

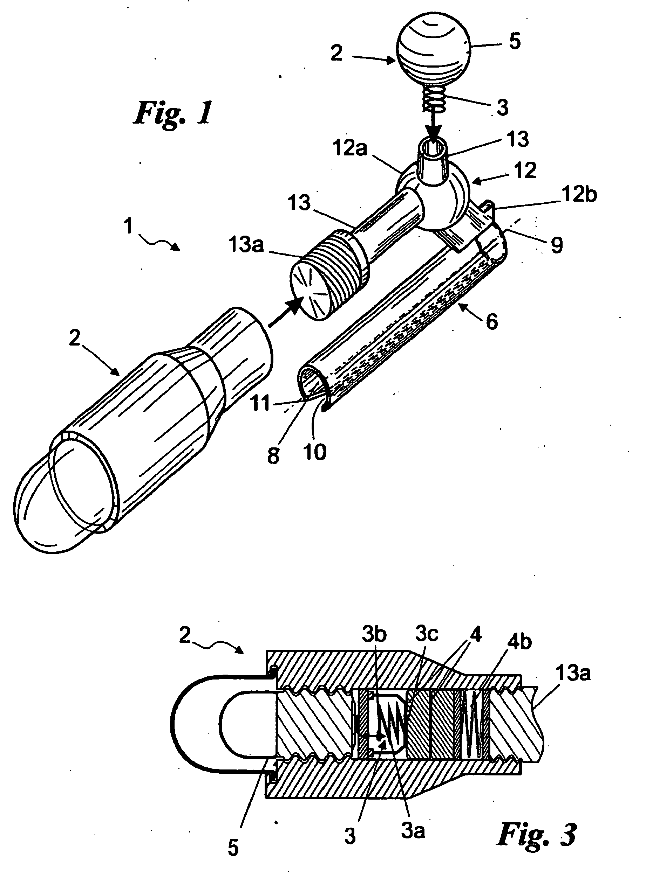

Fig. 3, for example, shows a sensor member 3 which operates by means of a spring **3a** made of conducting material, having one free end 3b and one engaged end **3c** connected to the warning unit 2. This engaged end 3c is in contact with a battery **4,** in this case consisting of two cells, contact with the same being ensured by the force of an appropriate elastic element **4b.**

With a slight vibration of the warning unit 2, the free end 3b of the spring 3a oscillates and provides intermittent contact between the batteries 4 and appropriate highlighting means **5,** which when at rest are not in contact with the batteries 4.

The job of said highlighting means 5 is to emit perceivable signals correlated with said vibrations. In the example in Fig. 3 said highlighting means 5 consist of optical means that are activated by the electrical energy supplied to them by the batteries 4, via conduction of the spring 3a and of both its ends 3b and 3c.

The optical means are preferably a light-emitting diode and advantageously the latter can be a laser diode which, due to its uniform monochromatic light, has a high efficiency, also with remote signalling capacity and with a greatly reduced electricity consumption.

The laser diode can be of the type used as a light pointer, for blackboards or other.

To increase the endurance and visibility of the highlighting means 5 it is also expedient for the latter to be intermittent.

With a laser diode the batteries 4 have a very long life and the fisherman is practically never suddenly left without a signal and does not have to continuously check the efficiency of the device.

Said highlighting means 5 alternatively consist of acoustic means which can operate electrically or mechanically. In the latter case they consist of a simple bell.

Lastly, in one single signalling device 1 there can be both optical highlighting means 5 and acoustic highlighting means 5.

The signalling device 1 includes at least one supporting element **6.**

The supporting element 6 comprises a through cavity **8,** i.e. a cavity that crosses it from side to side.

Said through cavity 8 is counter-shaped to the object to which it will be applied, in particular to an end portion of a fishing rod **7**, near the free line **7a,** i.e. the portion of line that is not adjacent to the fishing rod or reel and engages the hook or the equipment connected to it.

To apply the device to a fishing rod 7, the through cavity 8 may be in a truncated cone shape, with axis coinciding with the main direction of development **9** of the fishing rod 7.

By means of the through cavity 8 the supporting element 6 can be engaged by slotting into the fishing rod 7 or similar.

Furthermore the supporting element 6 is appropriately provided with a slit **10,** which develops parallel to the main direction of development 9.

Said slit 10 appropriately communicates with the through cavity 8 and with the outer part of the supporting element 6, furthermore the slit 10 is preferably linear and develops throughout the length of the through cavity 8.

For quick engagement of the signalling device 1 on the fishing rod 7, it is expedient for the slit 10 to be provided with shaped end portions **11** which substantially define an expansion of the slit 10; said ends 11 are also preferably rounded.

Lastly, the supporting element 6 provided with the slit 10 is conveniently at least partially elastically deformable so as to permit an expansion of the slit 10.

In order to obtain the latter property of elasticity, the supporting element 6 is made preferably of polymeric material, more preferably with a polypropylenic base, alternatively polyethylenic or PVC-based or other.

The signalling device 1 includes a connection unit **12,** which mechanically connects the supporting element 6 to said warning unit 2.

Said connection unit 12, like the supporting element 6, can be of different type and some non-limiting examples of an embodiment of the same are given below.

### EXAMPLE 1

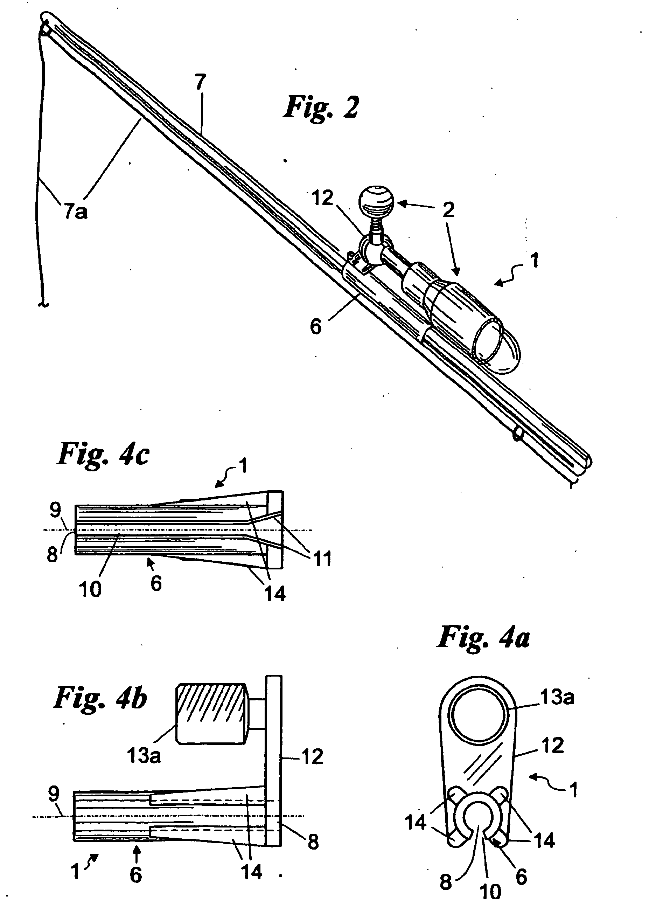

The first embodiment example of a signalling device 1 is illustrated in Fig. 1 and in Fig. 2.

In this case the supporting element 6 is sleeve-shaped and is provided with the slit 10 with shaped ends 11, described above.

The connection unit 12 is in one single piece with the supporting element 6. Said connection unit 12 is provided with a substantially spherical-shaped portion **12a** connected by means of an arm **12b** to the supporting element 6.

On the spherical portion 12a two rod-like protuberances are present **13,** one of which is threaded **13a,** and designed to support a warning unit 2 with highlighting means 5 of optical type, while the other protuberance 13 is not threaded and is designed to house a warning unit 2 with highlighting means 5 of acoustic type provided by an elastic element, which constitutes the sensor member 3, and by a bell.

Several warning units 2 can be conveniently present with highlighting means of acoustic type, or none of the same, just as several warning units 2 with optical type highlighting means 5 can be present.

### EXAMPLE 2

The second embodiment example of a signalling device 1, which does not form a part of the invention, is illustrated in orthographic projections in Figs. 4a, 4b and 4c.

Also in this case the supporting element 6 is sleeve-shaped, is provided with the slit 10 with shaped ends 11 described above and has the connection unit 12 integral and in one single piece with the supporting element 6.

In this case the supporting element 6 is provided with stiffening elements **14** in order to make the supporting element 6 more solid.

Said stiffening elements 14 consist of four fins positioned at the edges of the slit 10 and on the opposite side of the latter.

The connection unit 12, on the other hand, develops substantially over a flat surface crosswise and preferably perpendicular to the main direction of development 9 of the slit 10.

Said connection unit is provided with a threaded protuberance 13a designed to support a warning unit 2 with optical type highlighting means 5a.

### EXAMPLE 3

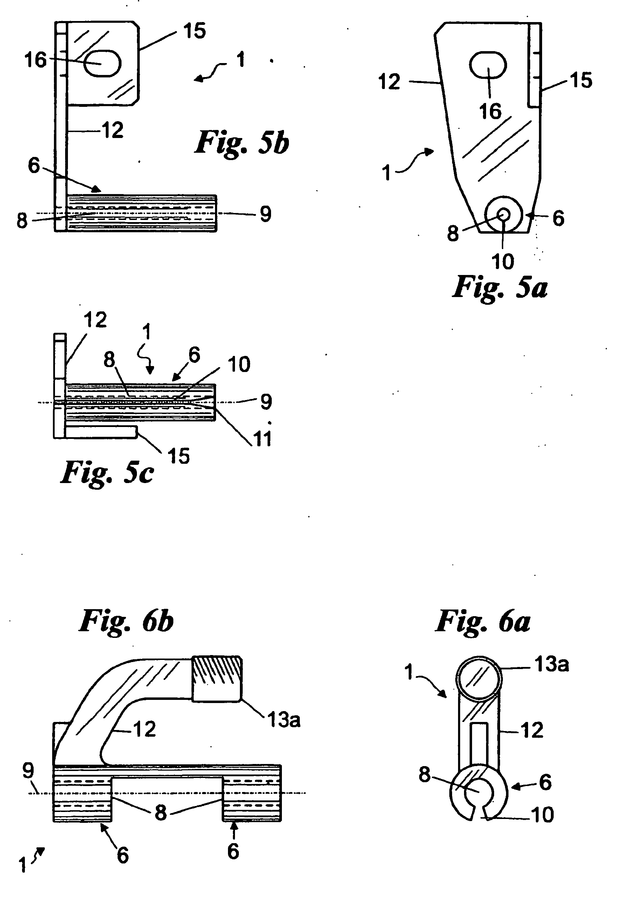

The third example of embodiment of a signalling device 1 is illustrated in orthographic projections in Figs. 5a, 5b and 5c.

Also in this case the supporting element 6 is sleeve-shaped, is provided with the slit 10 with shaped ends 11 described above and has the connection unit 12 integral and in one single piece with the supporting element 6.

In this embodiment, as in the preceding one, the connection unit 12 develops substantially over a flat surface perpendicular to the main direction of development 9 of the slit 10, but unlike the embodiment of the example 2, said connection unit 12 features a substantial width right from the sides of the supporting element 6, so that it is able to act at the same time also as a stiffening element 14.

In this case furthermore the connection unit 12 is provided with a lateral wing expansion **15,** for supporting a further warning unit.

Both the connection unit 12 and the lateral expansion 15 are provided with a through aperture **16,** designed to sustain a warning unit 2.

For said purpose the through aperture 16 can be threaded or slot-in and the warning units 2 are in turn provided with an engagement pin threaded, inserted or provided with bolts.

### EXAMPLE 4

A fourth example of embodiment of a signalling device 1, which does not form a part of the invention, is illustrated in orthogonal projection in Fig. 6a and 6b.

Two supporting elements 6 are present, both sleeve-shaped, and connected to each other.

One single through cavity 8 crosses both the supporting elements 6, and the same are provided with two slits 10 lying on the same line.

Also in this case the connection unit 12 is integral and in one single piece with the supporting elements 6.

The embodiment also comprises a threaded rod protuberance 13a, designed to support a warning unit 2.

### EXAMPLE 5

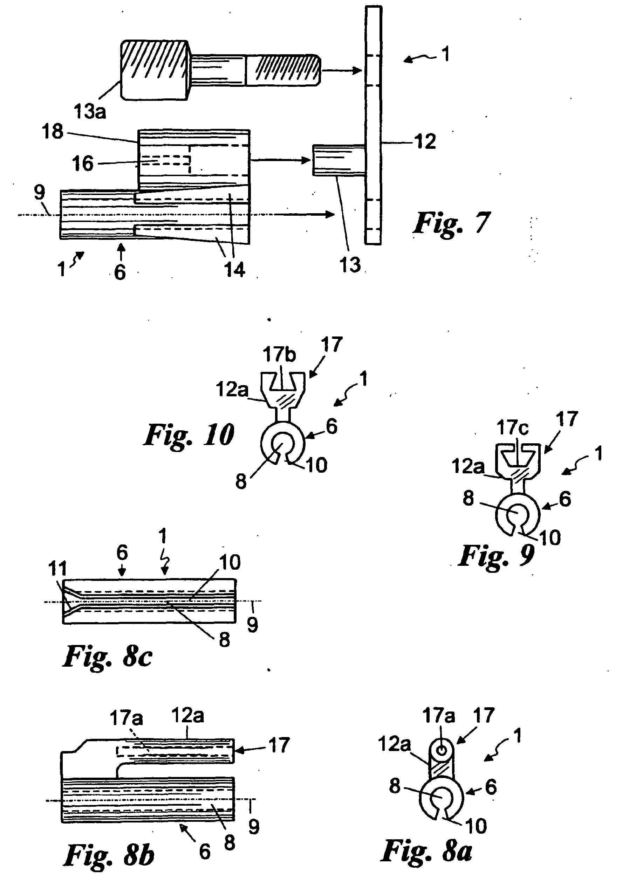

A further example of embodiment of a signalling device 1 is illustrated in Fig. 7. Also in this case the supporting element 6 is sleeve-shaped and is provided with stiffening elements 14 consisting of four fins.

The supporting element 6 is integral with a supporting element **18.**

Said supporting element 18 can be inserted by slotting or screwing into an appropriate protuberance 13, present on the connection unit 12.

The supporting element 18 is also preferably provided with an appropriate aperture 16, designed to support a warning unit 2.

Operation of the signalling device according to the invention is as follows.

The signalling device 1 is inserted in the fishing rod 7 or similar from the top or, more conveniently, the device 1 is slotted into the rod 7 by expansion of the slit 10.

If the supporting element 6 is provided with the shaped ends 11 described above, it is sufficient to press these against the fishing rod 7, in a direction crosswise to the main direction of development 9 to produce expansion of the slit 10 and slot-in of the supporting element 6.

Release of the signalling device 1 from the fishing rod 7 is performed analogously to the slot-in operation, i.e. by simply pulling the device 1.

Once inserted, the signalling device 1 signals the vibrations via the warning unit 2. The warning unit 2 correlates an electromagnetic signal with the mechanical signal provided by the vibrations and via said signal triggers a light or sound source.

Alternatively the mechanical impulse can be used directly to emit a perceivable signal. A similar situation exists, for example, when the highlighting means 5 consist of a bell and the sensor members 3 consist of an elastic element, like a spring.

It should be underlined that while touch and vibration activate the warning unit 2, bending of the fishing rod 7 does not activate it because it does not give the necessary impulses to movement of the sensor member 3.

The invention achieves important advantages.

Due to the slot-in connection system described above the signalling device 1 is in close contact with the fishing rod 7 or similar and the vibrations are optimally transmitted to the device 1.

Several tests have highlighted the fact that the line of the fishing rod 7 only has to be touched, as when a fish bites the hook, to activate the warning units 2 present on the device 1.

The signalling device 1 is furthermore extremely quick to install and this, as previously pointed out, is very useful if a telescopic fishing rod has to be fully closed and it is therefore necessary to connect and release the device 1 every time it is used, or for other reasons making it necessary to fit and remove the device 1.

One simple operation is sufficient to connect the device 1 and installation is complete. Likewise release is immediate.

A further advantage is provided by the fact that bending does not activate the warning units 2, which are activated by the more abrupt, rapid and alternating movements of the vibrations resulting from touching of the bait or similar. This eliminates false touching or biting alarms caused by bending of the fishing rod 7 due to wind or atmospheric disturbances or in the presence of strong turbulence due to the current or movement of the water.

A further advantage is provided by the shape of the supporting element 6, which is the part of the device 1 nearest the free line 7a of the fishing rod 7, connected to the reel. It has no parts protruding or jutting out that can cause tangling of the line, either in the casting or reeling in phase, such as bolts, screws, hooks and similar.

A last advantage is represented by the presence of a light source such as a laser diode which permits considerable energy saving, therefore prolonged endurance and also reduced weight of the batteries 4, so that they do not make the device 1 at the end of the rod heavy. The laser diode is also able to provide efficient remote signalling and due to its minimum consumption and consequent long life of its batteries, the fisherman does not have to perform continuous checks on the efficiency of the device.

The invention is subject to modifications and variations.

For example, as highlighted in Figs. 8a, 8b and 8c and in Figs. 9 and 10, but not according to the invention, the connection unit 12 can consist of two separate parts, one first fixed part **12a,** integral with the supporting element 6, and a second mobile part, integral with the warning unit 2.

Said fixed part 12a and mobile part can be reciprocally connected.

For said purpose the fixed part 12a is provided with an appropriate sliding slot-in fitting **17,** which can be of different types: tubular **17a,** dovetail **17b,** inverted dovetail **17c** or other. The fixed part 12a and the mobile part can be interconnected also by means of screw connection elements.

Due to the connection element 12 divided into two parts the device 1 can easily comprise a warning unit 2 of any type, also a warning unit 2 already available on the market.

For said purpose, in view of the considerable advantages of immediate use, adhesion, sensitivity and minimum overall dimensions of the supporting element 6 and of the connection unit 12, the latter can be marketed separately from the warning unit.

In a further variation, the highlighting means 5 emit non-visible electromagnetic signals and there is also a receiver unit that perceives said electromagnetic signals and propagates indications correlated with said signals. Said indication can be optical, acoustic or tactile, such as a vibration.

Said electromagnetic signals preferably consist of infrared or radiofrequency signals, more preferably said highlighting means 5 are connected by means of a device that uses the known bluetooth technology, which provides for the use of a radiofrequency band around 2.4 GHz.

The latter case is convenient for reasons of practicality, functionality and due to the reduced overall dimensions and weight of the signalling means 5.

This variation is very convenient as it allows the fisherman to have complete control of the situation at a distance from the fishing rod.

## Claims

1. Signalling device applicable to fishing rods for signalling touching or biting of the bait comprising: a warning unit (2) including at least one sensor member (3) for detecting vibrations of a fishing rod (7) and highlighting means (5) of said vibrations designed to emit perceivable signals correlated with said vibrations, at least one supporting element (6) having a through cavity (8) substantially counter-shaped to a portion of said fishing rod (7) and a slit (10) obtained on said supporting element (6), said slit (10) communicating with said through cavity (8) and developing throughout the length of the same, said supporting element (6) being deformable to permit expansion of said slit (10), so that it can be slot-inserted on said portion of said fishing rod (7) in a crosswise direction to said slit (10), and **characterised in that** the signalling device includes a connection unit (12) designed to mechanically connect said supporting element (6) to two different and independent from each other warning units (2), which are engageable to said connection unit (12).

2. Signalling device according to Claim 1, in which said supporting element (6) is made of polypropylene.

3. Signalling device according to Claim 1, in which said slit (10) is provided with shaped end portions (11) defining an expansion of said slit (10).

4. Signalling device according to Claim 1, in which said supporting element (6) is provided with stiffening elements (14), and in which said stiffening elements (14) are fins positioned at least at one end of said slit (10).

5. Signalling device according to Claim 1, in which said connection unit (12) is a development of at least one said fin.

6. Signalling device according to Claim 1, in which said highlighting means (5) include a laser diode.

7. Signalling device according to Claim 1, in which said two warning units (2) selectively include said highlighting means (5) of optical (5a) and acoustic (5b) type.

8. Signalling device according to Claim 1, in which said connection unit (12) is in one single piece with said supporting element (6)

9. Signalling device according to Claim 1, in which said connection unit (12) is engaged by slotting into said supporting element (6).

10. Signalling device according to Claim 1, in which said connection unit (12) is provided with at least one threaded aperture designed for the connection of at least one of said warning units (2).

11. Signalling device according to Claim 1, in which said connection unit (12) is provided with at least one slot-in aperture designed for the connection of at least one of said warning units (2).

12. Signalling device according to Claim 1, in which said connection unit (12) is provided with at least one rod-like protuberance (13) designed to support at least one of said warning units (2).

13. Signalling device according to Claim 1, in which said connection unit (12) is provided with at least one lateral wing expansion (15) designed for the connection of at least one of said warning units (2).

14. Signalling device according to Claim 1, in which said connection unit (12) is provided separately in a fixed part (12a), integral with said supporting element (6), and in a mobile part, integral with said warning unit (2), a removable slot-in fitting (17) being provided between said fixed part (12a) and said warning unit (2).

## Patentansprüche

1. Auf Angelruten aufsetzbare Anzeigevorrichtung für die Signalisierung des Anschlags oder Biss am Köder gebildet aus: einem Anzeigesatz (2) bestehend aus mindestes einem Sensororgan (3) der Vibrationen einer Angelrute (7) und geeigneten Anzeigemitteln (5) genannter Vibrationen, um wahrnehmbare und von genannten Vibrationen abhängige Signale abzugeben, weiters aus mindestens einem Trägerelement (6) mit einem durchgehenden und im wesentlichen entsprechend einer Portion genannter Angelrute (7) fassonierten Hohlraum (8) und einem auf genanntem Trägerelement (6) gewonnenen Schlitz (10), wobei genannter Schlitz (10) mit genanntem durchgehendem Hohlraum (8) verbunden ist und sich entlang der gesamten Länge von diesem erstreckt, wobei genanntes Trägerelement (6) derart biegsam ist, dass eine Erweiterung des genannten Schlitzes (10) ermöglicht wird, sodass es auf genannte Portion der Angelrute (7) der Länge genannten Schlitzes (10) nach durch Einhaken einsetzbar ist und **dadurch gekennzeichnet, dass** genannte Anzeigevorrichtung eine geeignete Verbindungseinheit (12) umfasst, um genanntes Trägerelement (6) mit den zwei untereinander unterschiedlichen und unabhängigen Anzeigesätze (2), die an genannte Verbindungseinheit (12) koppelbar sind, mechanisch zu verbinden.

2. Anzeigevorrichtung nach Anspruch 1, n der genanntes Trägerelement (6) aus Polypropylen ist.

3. Anzeigevorrichtung nach Anspruch 1, in der genannter Schlitz (10) fassonierte Endportionen (11) aufweist, die eine Erweiterung genannten Schlitzes (10) bestimmen.

4. Anzeigevorrichtung nach Anspruch 1, in der genanntes Trägerelement (6) Versteifungselemente (14) hat und in der es sich bei den genannten Versteifungselemente (14) um Rippen handelt, die sich mindestens an einem Ende genannten Schlitzes (10) befinden.

5. Anzeigevorrichtung nach Anspruch 1, in der genannte Verbindungseinheit (12) eine Weiterführung von mindestens einer der genannten Rippen ist.

6. Anzeigevorrichtung nach Anspruch 1, in der genannte Anzeigemitteln (5) eine Laserdiode umfassen.

7. Anzeigevorrichtung nach Anspruch 1, in der die genannten Anzeigesätze (2) wahlweise genannte Anzeigemitteln (5) sowohl optischer (5a) als auch akustischer (5b) Art umfassen.

8. Anzeigevorrichtung nach Anspruch 1, in der genannte Verbindungseinheit (12) aus einem Stück mit genanntem Trägerelement (6) ist.

9. Anzeigevorrichtung nach Anspruch 1, in der genannte Verbindungseinheit (12) an genanntem Trägerelement (6) durch Einhaken eingesetzt ist.

10. Anzeigevorrichtung nach Anspruch 1, in der genannte Verbindungseinheit (12) mindestens eine geeignete Gewindeöffnung aufweist, um die Verbindung von mindestens einem der genannten Anzeigesätze (2) zu ermöglichen.

11. Anzeigevorrichtung nach Anspruch 1, in der genannte Verbindungseinheit (12) mindestens eine geeignete Öffnung zum Einhaken aufweist, um die Verbindung von mindestens einem der genannten Anzeigesätze (2) zu ermöglichen.

12. Anzeigevorrichtung nach Anspruch 1, in der genannte Verbindungseinheit (12) mindestens eine geeignete stabartige Auskragung (13) aufweist, um das Stützen von mindestens einem der genannten Anzeigesätze (2) zu ermöglichen.

13. Anzeigevorrichtung nach Anspruch 1, in der genannte Verbindungseinheit (12) mindestens eine geeignete seitliche rippenartige Weiterführung (15) aufweist, um die Verbindung von mindestens einem der genannten Anzeigesätze (2) zu ermöglichen.

14. Anzeigevorrichtung nach Anspruch 1, in der genannte Verbindungseinheit (12) zweigeteilt in einen mit genanntem Trägerelement (6) verbundenen fixen Teil (12a) und einen mit genanntem Anzeigesatz (2) verbundenen beweglichen Teil vorgesehen ist, insofern eine abnehmbare Klemmverbindung (17) zwischen genanntem fixen Teil (12a) und genanntem Anzeigesatz (2) vorgesehen ist.

## Revendications

1. Dispositif de signalisation applicable aux cannes à pêche pour la signalisation de touche ou de prise à l'hameçon comprenant : un groupe avertisseur (2) doté d'au moins un organe de détection (3) de vibrations d'une canne à pêche (7) et de moyens de mise en évidence (5) desdites vibrations capables d'émettre des signaux perceptibles et liés auxdites vibrations, au moins un élément de support (6) ayant une cavité passante (8) et substantiellement contre-galbée sur une portion de ladite canne à pêche (7) et une fente (10) obtenue sur ledit élément de support (6), ladite fente (10) étant en communication avec ladite cavité passante (8) et se développant sur toute la longueur de cette dernière, ledit élément de support (6) étant déformable de manière à permettre une dilatation de ladite fente (10), pour permettre l'introduction par encastrement sur ladite portion de ladite canne à pêche(7) en direction transversale de ladite fente (10), et **caractérisé par le fait que** ledit dispositif de signalisation comprend une unité de liaison (12) permettant de raccorder mécaniquement ledit élément de support (6) à deux groupes avertisseurs (2) réciproquement différents et indépendants, qui peuvent être reliés à ladite unité de liaison (12).

2. Dispositif de signalisation selon la revendication 1, où ledit élément de support (6) est en polypropylène.

3. Dispositif de signalisation selon la revendication 1, où ladite fente (10) présente des portions d'extrémités galbées (11) définissant une dilatation de ladite fente (10).

4. Dispositif de signalisation selon la revendication 1, où ledit élément de support (6) présente des éléments de raidissement (14) et où lesdits éléments de raidissement (14) sont des ailettes placées au moins à une extrémité de ladite fente (10).

5. Dispositif de signalisation selon la revendication 1, où ladite unité de liaison (12) est un développement d'au moins un desdites ailettes.

6. Dispositif de signalisation selon la revendication 1, où lesdits moyens de mise en évidence (5) comprennent une diode laser.

7. Dispositif de signalisation selon la revendication 1, où lesdits deux groupes avertisseurs (2) comprennent sélectivement lesdits moyens de mise en évidence (5) du type optique (5a) comme du type acoustique (5b).

8. Dispositif de signalisation selon la revendication 1, où ladite unité de liaison (12) est en une seule pièce avec ledit élément de support (6).

9. Dispositif de signalisation selon la revendication 1, où ladite unité de liaison (12) est engagée par encastrement dans ledit élément de support (6).

10. Dispositif de signalisation selon la revendication 1, où ladite unité de liaison (12) présente au moins une ouverture filetée permettant la connexion d'au moins un desdits groupes avertisseurs (2).

11. Dispositif de signalisation selon la revendication 1, où ladite unité de liaison (12) présente au moins une ouverture à encastrement permettant la connexion d'au moins un desdits groupes avertisseurs (2).

12. Dispositif de signalisation selon la revendication 1, où ladite unité de liaison (12) présente au moins une protubérance (13) à tige permettant de soutenir au moins un desdits groupes avertisseurs (2).

13. Dispositif de signalisation selon la revendication 1, où ladite unité de liaison (12) présente au moins une extension latérale (15) à aile permettant le raccordement d'au moins un desdits groupes avertisseurs (2).

14. Dispositif de signalisation selon la revendication 1, où ladite unité de liaison (12) est prévue divisée en une partie fixe (12a), solidaire avec ledit élément de support (6), et en une partie mobile, solidaire avec ledit groupe avertisseur (2), une fixation par encastrement (17) amovible étant prévue entre ladite partie fixe (12a) et ledit groupe avertisseur (2).
